# EUROPÄISCHE PATENTSCHRIFT

(11) **EP 0 604 469 B1**
(45) Veröffentlichungstag und Bekanntmachung des Hinweises auf die Patenterteilung: **12.03.1997**
(21) Anmeldenummer: 92918213.7
(22) Anmeldetag: 31.08.1992
(51) Int. Cl.: H04N 3/26

(54) **SCHALTUNGSANORDNUNG ZUM ERZEUGEN EINER PARABELFÖRMIGEN MODULATIONSSPANNUNG ZUM MODULIEREN DER FOKUSSPANNUNG BEI GERÄTEN MIT BILDRÖHRE, INSBESONDERE FERNSEHGERÄTEN**
CIRCUIT ARRANGEMENT FOR GENERATING A PARABOLIC MODULATION VOLTAGE TO MODULATE THE FOCUSSING VOLTAGE IN DEVICES WITH PICTURE TUBE, ESPECIALLY TELEVISION SETS
CIRCUITS GENERATEURS D'UNE TENSION PARABOLIQUE DE MODULATION DE LA TENSION DE FOCALISATION DANS DES APPAREILS POURVUS D'UN TUBE-IMAGE, NOTAMMENT DES APPAREILS DE TELEVISION

(30) Priorität: 13.09.1991 DE 4130581
(43) Veröffentlichungstag der Anmeldung: 06.07.1994
(73) Patentinhaber: VOGT electronic Aktiengesellschaft, D-94128 Obernzell (DE)
(72) Erfinder: HARTMANN, Uwe, D-8391 Erlau (DE); MAI, Udo, D-8391 Untergriesbach (DE); THALER, Walter, D-8391 Thyrnau (DE); WANDL, Johann, D-8391 Untergriesbach (DE)
(74) Vertreter: Hieke, Kurt
(86) Internationale Anmeldenummer: EP9202003
(87) Internationale Veröffentlichungsnummer: WO9306688

(56) Entgegenhaltungen:
- GB-A- 2 018 520
- US-A- 4 611 151
- US-A- 4 644 230
- PATENT ABSTRACTS OF JAPAN vol. 5, no. 171 (E-80)(843) 30. Oktober 1981 & JP-A-56 98 970

## Beschreibung

Die Erfindung bezieht sich auf eine Schaltungsanordnung gemäß dem einleitenden Teil des Patentanspruchs 1.

Insbesondere für das von den Fernsehgeräteherstellern in Aussicht genommene neue Bildröhrenformat 16:9 ist eine Bildröhre erforderlich, bei der die Fokusspannung parabelförmig moduliert werden muß.

Auch im Rahmen der bisherigen Fernsehtechnik wurde früher mit parabelförmiger Modulation der Fokusspannung gearbeitet, doch wurde diese Technik aufgegeben, da bei dem bisher üblichen Format von Fernsehbildröhren eine genaue Fokussierung des Elektronenstrahls/der Elektronenstrahlen auf den Bildschirm über die Zeilen hinweg auch auf andere Weise und kostengünstiger erreicht werden konnte.

Im Zuge der früheren Technik der parabelförmigen Modulation der Fokusspannung sind für die Erzeugung der horizontalablenkungsfrequenten Modulationsspannung von parabelförmigem zeitlichem Verlauf zwei Lösungen bekannt geworden. Beide Lösungen arbeiten mit einem Transformator, der eine Primärwicklung und eine mit dieser verkoppelte Sekundärwicklung aufweist.

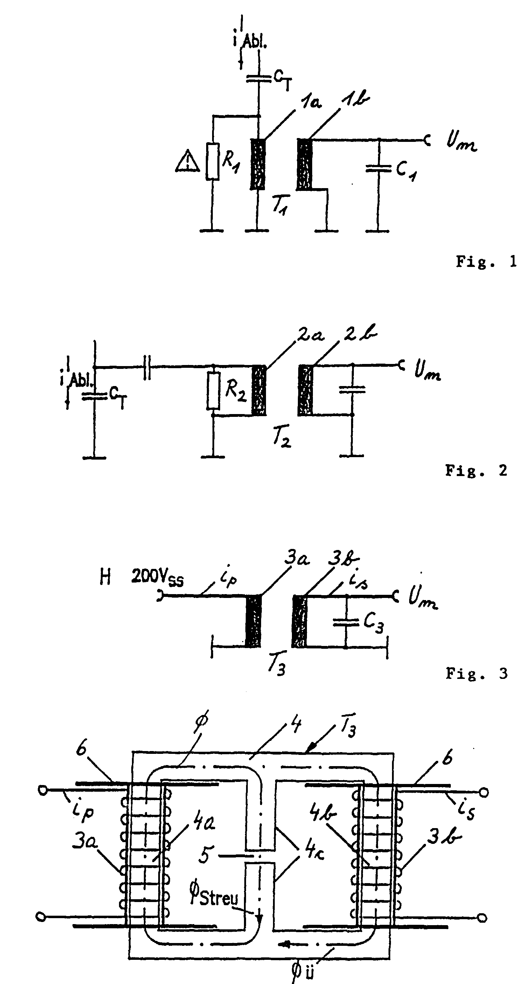

Bei der ersten Lösung weist der Transformator ein sehr hohes Übersetzungsverhältnis auf, wobei die Primärwicklung in den Ablenkstromkreis geschaltet ist. Der sägezahnförmige Ablenkstrom erregt im Transformatorkern einen sägezahnförmigen magnetischen Fluß, der in der Sekundärwicklung einen sägezahnförmigen Sekundärstrom erzeugt, der in einen Kondensator eingespeist wird, an dem hierdurch die parabelförmige Modulationsspannung entsteht (Fig.1).

Bei der zweiten Lösung sind die Primärwicklung und die Sekundärwicklung sehr fest verkoppelt, und der Transformator ist so ausgelegt, daß er einen hochohmigen Eingang aufweist. Der Primärspule wird die parabelförmige Spannung zugeführt, die am im Fernsehgerät vorhandenen sogenannten Tangenskondensator abfällt, und der Transformator transformiert diese Spannung auf die sekundärseitig benötigten Spannungswerte (Fig.2).

Die erstgenannte Lösung hat den Nachteil, daß, wie auch bei der üblichen Linearitätsspule, die Primärseite des Transformators wegen vorhandender Eigenresonanzen mit einem Widerstand bedämpft werden muß und für den Fehlerfall (Unterbrechung der Primärwicklung) für diesen Widerstand ein teuerer Sicherheitswiderstand eingesetzt werden muß. Außerdem müssen die Kopplung und das Übersetzungsverhältnis extrem groß sein. Hinzu kommt, daß die Versorgungsspannung der Horizontalendstufe um den Betrag des Spannungsabfalles an der Primärwicklung des Transformators erhöht werden muß, was größere Verluste bedeutet.

Die oben an zweiter Stelle genannte Lösung hat den Nachteil, daß zur Vermeidung einer Verfälschung der Horizontallinearität der Transformator extrem hochohmig sein muß und daß ebenfalls eine sehr enge Kopplung zwischen Primärwicklung und Sekundärwicklung erforderlich ist, damit es nicht zu Phasenverschiebungen der Fokusparabel kommt. Es ist ein Koppelkondensator und ein Dämpfungswiderstand erforderlich.

Bei beiden Lösungen ist es ferner nachteilig, daß die parabelförmige Modulationsspannung nur mit einem verhältnismäßig großen Aufwand während des Vertikalrücklaufs austastbar ist. Das Austasten der Modulationsspannung während des Vertikalrücklaufs ist wegen deren Einfluß auf den Anodenstrom eine bevorzugte Maßnahme im Zusammenhang mit der bei modernen Geräten während dieser Zeit stattfindenden Messungen der Bildröhrendaten.

Die Anforderungen der beiden vorgenannten Varianten an den Übertrager (große Induktivität, feste Kopplung und hohe Spannungsfestigkeit der Sekundärwicklung) haben sich bisher am besten durch einen Transformator mit geschlossenem Kern, einen Ringkerntransformator, erfüllen lassen, der aufwendig ist.

Eine weitere, dritte, Lösung ist aus der US-A- 4 644 230 bekannt. Diese bekannte Lösung besteht darin, einen Schwingkreis magnetisch mit dem Zeilentransformator zu koppeln und die an dem Schwingkreis entstehende Spannung zu der Fokusspannung zu addieren. Dabei ist die Frequenz des Schwingkreises etwas höher als die Zeilenfrequenz so abgestimmt, daß zu der Fokusspannung der zwischen zwei Scheiteln gleicher Polarität liegende Teil einer Sinusspannung hinzugefügt wird.

Der Erfindung liegt die Aufgabe zugrunde, eine Schaltungsanordnung zum Erzeugen einer parabelförmigen Modulationsspannung zu schaffen, die sich mit einem geringeren Aufwand, als für die beiden vorgenannten bekannten Lösungen erforderlich, realisieren läßt, und bei der auch die Modulationsspannung während des Vertikalrücklaufs auf einfache, kostengünstig zu verwirklichende Weise austastbar ist.

Die vorgenannte Aufgabe wird durch die Merkmale des Patentanspruchs 1 gelöst.

Die erfindungsgemäße Lösung sieht in gleicher Weise wie die an erster Stelle genannte bekannte Lösung vor, daß die Primärwicklung im Transformatorkern einen sägezahnförmigen magnetischen Fluß erregt, und daß der diesem entsprechende sägezahnförmige Ausgangsstrom der Sekundärwicklung in einen Kondensator eingespeist wird, an dem hierdurch die parabelförmige Modulationsspannung entsteht. Anders aber als bei der bekannten Lösung wird die Primärwicklung nicht in den Ablenkstromkreis geschaltet, sondern an eine der vorhandenen Horizontal-Ablenkspannung proportionale Spannung angeschlossen, und der Transormator wird so ausgeführt, daß er bei hoher Eingangsinduktivität eine nur extrem lose Kopplung zwischen der Primärspule und der Sekundärspule aufweist, indem nur ein Bruchteil des von der Primärwicklung erregten magnetischen Flusses mit der

Sekundärwicklung verkettet ist, während sich der überwiegende Rest dieses Flusses über einen an der Sekundärwicklung vorbeiführenden Nebenweg im Transformatorkern schließt. Der hohe Induktivitätsanteil des Nebenweges läßt unter der Beaufschlagung der Primärspule mit der Horizontalablenkspannung einen nahezu sägezahnförmigen Primärstrom entstehen, der im Transformatorkern einen sägezahnförmigen magnetischen Fluß und damit auch einen sägezahnförmigen Sekundärstrom in der Sekundärwicklung erzeugt, der, in den Kondensator eingespeist, an diesem die gewünschte parabelförmige Modulationsspannung entstehen läßt.

Der für die erfindungsgemäße Schaltungsanordnung benötigte Transformator ist sehr kostengünstig auf einfache Weise herstellbar, und es sind keine Dämpfungswiderstände, insbesondere auch nicht in Form teuerer Sicherheitswiderstände, erforderlich.

Die Unteransprüche betreffen bevorzugte Ausgestaltungen der Schaltungsanordnung gemäß Patentanspruch 1. hierbei gibt der Unteranspruch 3 eine besonders günstige Möglichkeit der Austastung der parabelförmigen Modulationsspannung während des Vertikalrücklaufs an, die ebenfalls sehr kostengünstig und funktionssicher realisierbar ist und überdies jeglichen störenden Einfluß auf die Primärseite praktisch ausschließt.

Die Erfindung wird nachstehend anhand der Zeichnung an einem Ausführungsbeispiel noch näher erläutert.

In der Zeichnung zeigt jeweils schematisch:
- Fig. 1: das Schaltbild der bekannten Schaltungsanordnung, bei der die Primärwicklung des Transformators in den Ablenkstromkreis geschaltet ist,
- Fig. 2: das Schaltbild der bekannten Schaltungsanordnung, bei der dem Transformator primärseitig die am Tangenkondensator abfallende parabelförmige Spannung zugeführt wird,
- Fig. 3: das Schaltbild einer Schaltungsanordnung gemäß der Erfindung,
- Fig. 4: den schematischen Aufbau eines bei der Schaltungsanordnung gemäß Fig. 3 verwendbaren Transformators,
- Fig. 5: eine praktische Ausführung des Transformators gemäß Fig. 4,
- Fig. 6: die um eine Einrichtung zum Austasten der sekundärseitig erhaltenen Modulationsspannung während des Vertikalrücklaufs erweiterte Schaltungsanordnung gemäß der Erfindung,
- Fig. 7: eine weitere, um eine Einrichtung zum Austasten der Modulationsspannung während des Vertikalrücklaufs erweiterte Schaltungsanordnung gemäß der Erfindung, und
- Fig.8a bis Fig.8d: den zeitlichen Verlauf von Spannungen und Strömen bei der Schaltungsanordnung nach Fig. 6 wiedergebende, mit einem Oszillographen gewonnene Schaubilder.

Bei der bekannten Schaltungsanordnung gemäß Fig. 1 liegt die Primärwicklung la des Transformators T₁ in Serie mit dem üblichen Tangenskondensator C_{T} im Ablenkstromkreis, so daß sie von dem sägezahnförmigen Ablenkstrom i_{ABL} durchflossen wird. Der Transformator weist ein extrem großes Übersetzungsverhältnis und eine extrem große Kopplung auf, und es wird in der Sekundärwicklung 1b von der Primärseite her ein sägezahnförmiger Sekundärstrom erzeugt, der in den zur Sekundärwicklung 1b parallel geschalteten Kondensator C₁ fließt und an diesem eine parabelförmige Spannung Uₘ entstehen läßt. Die Primärseite des Transformators ist wegen vorhandener Eigenresonanzen mit einem bei den gegebenen Transformatoreigenschaften unerläßlichen Widerstand R₁ bedämpft, der für den Fehlerfall als teurer Sicherheitswiderstand ausgeführt sein muß. Die in Serie zum Tangenskondensator C_{T} liegende Primärwicklung 1a erfordert eine um den Spannungsabfall an ihr erhöhte Versorgungsspannung der Horizontalendstufe, wodurch die Verluste vergrößert werden.

Bei der bekannten Schaltungsanordnung nach Fig. 2 ist die Primärwicklung 2a des Transformators T₂ zur vom sägezahnförmigen Ablenkstrom i_{ABL} durchflossenen Tangenskondensator C_{T} parallelgeschaltet. Sie ist daher bereits mit einer parabelförmigen Spannung beaufschlagt, die durch den Transformator T₂ zur Sekundärseite übertragen und auf die benötigten Spannungswerte transformiert wird. Der Transformator T₂ weist eine feste Kopplung zwischen Primärwicklung 2a und Sekundärwicklung 2b sowie einen hochohmigen Eingang auf und erfordert primärseitig parallel zur Primärwicklung 2a ebenfalls einen Dämpfungswiderstand R₂.

Bei beiden bekannten Schaltungsanordnungen gemäß Fig. 1 bzw. Fig. 2 ist die sekundärseitige Modulationsspannung Uₘ wegen der genannten notwendigen Eigenschaften der Transformatoren T₁ bzw. T₂ während des Vertikalrücklaufs nur mit einem hohen zusätzlichen Aufwand ohne störende Rückwirkung auf den Ablenkstrom austastbar, was zur Durchführung der bei moderner Geräten während dieser Zeit stattfindenden üblichen Messungen der Bildröhrendaten nötig ist.

Bei der erfindungsgemäßen Schaltungsanordnung gemäß Fig. 3 ist die Primärwicklung 3a des Transformators T₃ an die Horizontalablenkspannung H von 200 V_{SS} angeschlossen.

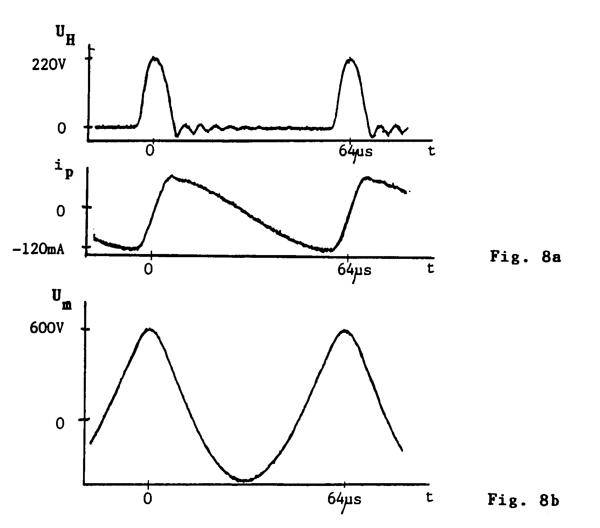

Den zeitlichen Verlauf dieser Spannung zeigt Fig. 8a in der oberen Bildhälfte. Der Transformator T₃ ist so beschaffen, daß er eine große Eingangsinduktivität bei nur sehr loser Kopplung zwischen der Primärwicklung 3a und der Sekundärwicklung 3b aufweist. Wegen der großen Eingangsinduktivität erzeugt die einer Rechteckspannung ähnelnde, etwa halbsinus-förmige Horizontalablenkspannung H in der Primärspule 3a einen nahezu sägezahnförmigen Primärstrom iₚ (Fig. 8a unten). Diese Stromkurve ist natürlich ebenfalls in der Sekundärwicklung 3b vorhanden. Der sägezahnförmige Sekundärstrom iₛ fließt wie bei der bekannten Schaltungsanordnung nach Fig. 1 in einen Kondensator C₃, an dem hierdurch die parabelförmige, horizontalablenkungsfrequente Modulationsspannung Uₘ von ca. 950 V_{SS} entsteht (Fig. 8b).

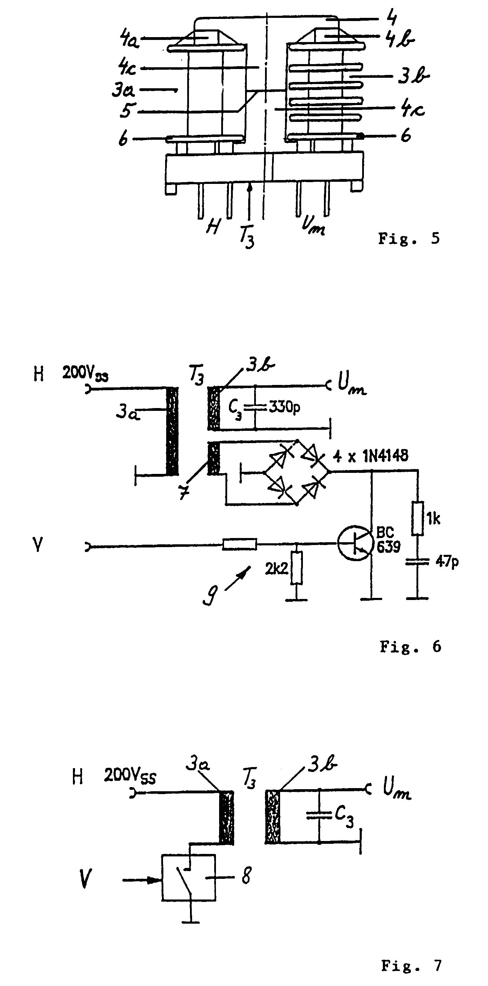

Die Fig. 4 zeigt einen bei der Schaltungsanordnung nach Fig. 3 verwendbaren Transformatoraufbau. Der Transformator T₃ hat hier einen E-E-Kern 4, dessen Außenschenkel 4a,4b von der Primärwicklung 3a bzw. der Sekundärwicklung 3b umschlossen sind. Der Mittelschenkel 4c des Kerns 4 ist mit einem Luftspalt 5 versehen und bildet einen an der Sekundärwicklung 3b vorbeiführenden Nebenweg für den größten Teil φₛₜᵣₑᵤ des von der Primärwicklung 3a aufgrund des sägezahnförmigen Primärstroms iₚ im Kern 4 erregten magnetischen Flusses φ, so daß nur ein kleiner Bruchteil φ_{ü} dieses Gesamtflusses φ mit der Sekundärwicklung 3b verkoppelt ist, also nur eine sehr geringe Kopplung zwischen der Primärwicklung 3a und der Sekundärwicklung 3b vorhanden ist. Nur der Flußanteil φ_{ü} bewirkt den sägezahnförmigen Sekundärstrom iₛ durch die Sekundärwicklung 3b, der an dem Kondensator C₃ die parabelförmige Modulationsspannung Uₘ entstehen läßt.

Die Kurvenform der parabelförmigen Modulationsspannung Uₘ ist durch Änderung des Übersetzungsverhältnisses und der Größe des über den Nebenweg (Mittelschenkel 4c und Luftspalt 5) an der Sekundärspule 3b vorbeigeführten großen Flußanteils φₛₜᵣₑᵤ beeinflußbar.

Für die Bildung des nahezu sägezahnförmigen Primärstroms iₚ (Fig.8a) ist also hauptsächlich der große Gesamtflußanteil φₛₜᵣₑᵤ maßgeblich, während der demgegenüber kleine Gesamtflußanteil φ_{ü} das Stromübersetzungsverhältnis des Transformators T₃ bestimmt. Ein relativ kleiner Sekundärstrom iₛ kann an einem entsprechend kleinen Kondensator C₃ die hier gewünschte relativ große Modulationsspannung Uₘ von 950 V_{SS} entstehen lassen.

Der Gesamtflußanteil φₛₜᵣₑᵤ ist bei dem Transformator T₃ gemäß Fig. 4 durch Ändern der Breite des Luftspalts 5 beeinflußbar.

Wie üblich, sind die Wicklungen 3a und 3b jeweils auf einem Spulenkörper 6 angeordnet.

Die Fig. 5 zeigt in schematischer Darstellung von der Seite gesehen eine praktische Ausführung des Transformators T₃ gemäß Fig. 4. In der Praxis ist der Luftspalt 5, wie hier dargestellt, nur sehr klein und führt zu keinem aus dem Kern 4 austretenden Streufeld. Wegen der relativ hohen Modulationsspannung von 950 V_{SS} wird der Transformator vorzugsweise wenigstens sekundärseitig in Kammerwickeltechnik ausgeführt.

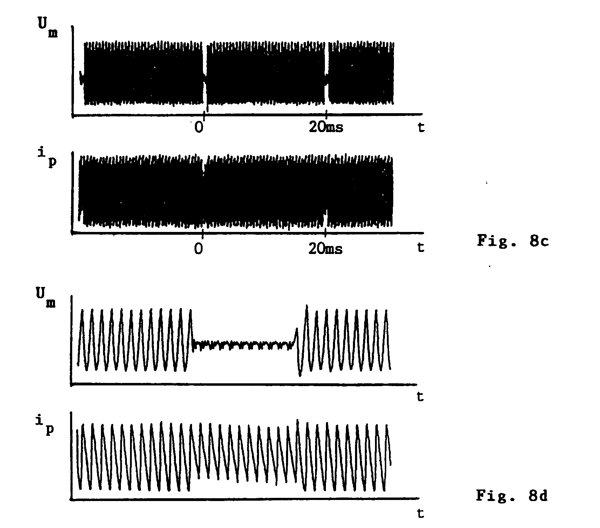

Wegen des Durchgriffes auf den Anodenstrom ist die Modulation der Fokusspannung während der cut-off- und drive-Messung unerwünscht. Die Fig. 6 zeigt das Schaltbild einer erfindungsgemäßen Schaltungsanordnung, die deswegen gegenüber Fig. 3 um eine Einrichtung zum Unterdrücken der Modulationsspannung Uₘ während des Vertikalrücklaufs erweitert ist. Diese Einrichtung besteht aus einer Hilfswicklung 7, die mit dem die Sekundärwicklung 3b durchsetzenden Gesasmtflußanteil φ_{ü} fest verkoppelt und mittels einer in Fig. 6 schematisch dargestellten, von der Vertikalablenkspannung V gesteuerten elektronischen Schaltung (9) während des Vertikalrücklaufs des Elektronenstrahls kurzschließbar ist. Die Hilfswicklung 7 kann z.B. bei dem Transformator gemäß Fig. 4 ebenfalls auf dem die Sekundärwicklung 3b tragenden Außenschenkel 4b, dem sogenannten Auskoppelschenkel, angeordnet sein. Die Fig. 6 zeigt die wesentlichen Bauteile der elektronischen Schaltung (9) zum Kurzschließen, und es ist ersichtlich, daß diese nur einen geringen baulichen Aufwand erfordert. Infolge der losen Kopplung zwischen der Primärwicklung 3a und der Sekundärwicklung 3b ist durch die Austastung der Modulationsspannung Uₘ während des Vertikalrücklaufs kein störender Einfluß auf der Primärseite vorhanden (Fig. 8c und 8d).

Die Fig. 7 zeigt eine weitere Möglichkeit einer einfachen Austastung der Modulationsspannung Uₘ während des Vertikalrücklaufs. Hier öffnet ein von der Vertikalablenkspannung V gesteuerter elektronischer Schalter 8 während dieses Rücklaufs den Primärstromkreis.

## Patentansprüche

1. Schaltungsanordnung zum Erzeugen einer horizantalablenkungsfrequenten Modulationsspannung mit parabelförmigem zeitlichem Verlauf zur entsprechenden Modulation der Fokusspannung bei Fernsehgeräten, wobei die Schaltungsanordnung mit einem Transformator (T₃) versehen ist, der eine Primärwicklung (3a), die im Transformatorkern (4) einen horizontalablenkungsfrequenten, sägezahnförmigen magnetischen Fluß (φ) erregt, sowie eine mit der Primärwicklung (3a) verkoppelte Sekundärwicklung (3b) aufweist, und wobei der sägezahnförmige, horizontalablenkungsfrequente Ausgangsstrom (iₛ) der Sekundärwicklung (3b) in einen Kondensator (C₃) eingespeist wird, an dem hierdurch die parabelförmige Modulationsspannung (Uₘ) entsteht, **dadurch gekennzeichnet**, daß die Primärwicklung (3a) an eine der Horizontalablenkspannung proportionale Spannung (H) angeschlossen ist, und daß nur ein Bruchteil (φ_{ü}) des von der Primärwicklung (3a) erregten magnetischen Flusses (φ) mit der Sekundärwicklung (3b) verkettet ist, während sich der überwiegende Rest (φₛₜᵣₑᵤ) dieses Flusses über einen an der Sekundärwicklung (3b) vorbeiführenden Nebenweg (4c,5) im Transformatorkern (4) schließt.

2. Schaltungsanordnung nach Anspruch 1, **dadurch gekennzeichnet**, daß der Nebenweg (4c,5) einen Luftspalt (5) aufweist.

3. Schaltungsanordnung nach Anspruch 1 oder 2, **dadurch gekennzeichnet**, daß der mit der Sekundärwicklung (3b) verkettete Teil (φ_{ü}) des von der Primärwicklung (3a) erregten magnetischen Flusses (φ) zusätzlich mit einer Hilfswicklung (7) fest verkoppelt ist, über die die Modulationsspannung (Uₘ), durch Kurzschließen der Hilfswicklung (7) durch eine von der Vertikalspannung (V) gesteuerte elektronische Schaltungsanordnung (9), für die Dauer des Vertikalrücklaufs unterdrückbar ist.

4. Schaltungsanordnung nach Anspruch 1 oder 2, **gekennzeichnet durch** einen durch die Vertikalspannung (V) gesteuerten elektronischen Schalter (8) zum Unterbrechen des Primärstromkreises zwecks Abschaltung der Modulationsspannung (Uₘ) für die Dauer des Vertikalrücklaufs.

5. Schaltungsanordnung nach einem der vorhergehenden Ansprüche, **dadurch gekennzeichnet**, daß der Kern (4) als E-E-Kern oder E-I-Kern ausgeführt ist, wobei die Primärwicklung (3a) auf dem einen und die Sekundärwicklung (3b) und ggf. die Hilfswicklung (7) auf dem anderen Außenschenkel (4a bzw. 4b) des Kerns (4) angeordnet ist und der Mittelschenkel (4c) ggf. mit dem Luftspalt (5) versehen ist.

6. Schaltungsanordnung nach einem der vorhergehenden Ansprüche, **dadurch gekennzeichnet**, daß der Transformator (T₃) mindestens sekundärseitig, ggf. einschließlich der Hilfswicklung (7), in Kammerwickeltechnik aufgebaut ist.

## Claims

1. Circuit arrangement for generating a horizontal sweep frequency modulation voltage with a parabolic time course for corresponding modulation of the focussing voltage in television sets, wherein the circuit arrangement is provided with a transformer (T₃) which comprises a primary winding (3a), which excites a horizontal sweep frequency sawtooth magnetic flux (φ) in the transformer core (4), and a secondary winding (3b) coupled with the primary winding (3a), and wherein the sawtooth horizontal sweep frequency output current (iₛ) of the secondary winding (3b) is fed into a capacitor (C₃) at which the parabolic modulation voltage (Uₘ) thereby arises, characterised thereby that the primary winding (3a) is connected to a voltage (H) proportional to the horizontal sweep voltage and that only a fraction (φ_{ü}) of the magnetic flux (φ) excited by the primary winding (3a) is linked with the secondary winding (3b), whilst the predominant remainder (φₛₜᵣₑᵤ) of this flux completes a circuit in the transformer core (4) by way of a shunt (4c, 5) bypassing the secondary winding (3b).

2. Circuit arrangement according to claim 1, characterised thereby that the shunt (4c, 5) comprises an air gap (5).

3. Circuit arrangement according to claim 1 or 2, characterised thereby that the part (φ_{ü}), which is linked with the secondary winding (3b), of the magnetic flux (φ) excited by the primary winding (3a) is additionally fixedly coupled with an auxiliary winding (7), by way of which the modulation voltage (Uₘ) can be suppressed for the duration of the vertical return by short-circuiting of the auxiliary winding (7) by an electronic circuit arrangement (9) controlled by the vertical voltage (V).

4. Circuit arrangement according to claim 1 or 2, characterised by an electronic switch (8), which is controlled by the vertical voltage (V), for interruption of the primary current circuit for the purpose of switching off the modulation voltage (Uₘ) for the duration of the vertical return.

5. Circuit arrangement according to one of the preceding claims, characterised thereby that the core (4) is executed as an E-E core or an E-I core, wherein the primary winding (3a) is arranged on the one outer limb (4a) and the secondary winding (3b) and in a given case the auxiliary winding (7) on the other outer limb (4b) of the core (4) and the centre limb (4c) in a given case is provided with the air gap (5).

6. Circuit arrangement according to one of the preceding claims, characterised thereby that the transformer (T₃) is constructed at least at the secondary side, in a given case including the auxiliary winding (7), in chamber winding technique.

## Revendications

1. Montage de production d'une tension de modulation à fréquence de déflexion horizontale et de courbe, en fonction du temps, parabolique, pour moduler de manière correspondante la tension de focalisation dans des récepteurs de télévision, le montage étant muni d'un transformateur (T₃), qui comporte un enroulement primaire (3a), qui excite dans le noyau (4) du transformateur un flux (Φ) magnétique en forme de dents de scie et à fréquence de déflexion horizontale, ainsi qu'un enroulement (3b) secondaire couplé à l'enroulement primaire (3a), le courant (iₛ) de sortie en forme de dents de scie et à fréquence de déflexion horizontale de l'enroulement secondaire (3b) étant introduit dans un condensateur (C₃) aux bornes duquel apparaît de ce fait la tension (Uₘ) de modulation parabolique, caractérisé en ce que l'enroulement primaire (3a) est connecté à une tension (H) proportionnelle à la tension de déflexion horizontale et que seule une fraction (Φ_{ü}) du flux (Φ) magnétique excité par l'enroulement primaire (3a) est interceptée par l'enroulement secondaire (3b), tandis que la majeure partie restante (Φ_{fuite}) de ce flux se ferme par l'intermédiaire d'une voie auxiliaire (4c, 5) passant devant l'enroulement secondaire (3b) dans le noyau (4) du transformateur.

2. Montage suivant la revendication 1, caractérisé en ce que la voie auxiliaire (4c, 5) comporte un entrefer (5).

3. Montage suivant la revendication 1 ou 2, caractérisé en ce que la partie (Φ_{ü}) du flux magnétique (Φ) excité par l'enroulement primaire (3a), qui est interceptée par l'enroulement secondaire (3b) est couplée en plus de manière fixe à un enroulement auxiliaire (7), par l'intermédiaire duquel la tension (Uₘ) de modulation peut être supprimée pour la durée du retour de balayage vertical par court-circuit de l'enroulement auxiliaire (7) par un montage (9) électronique commandé par la tension verticale (V).

4. Montage suivant la revendication 1 ou 2, caractérisé par un interrupteur (8) électronique commandé par la tension verticale (V) qui est destiné à interrompre le circuit primaire en vue de débrancher la tension (Uₘ) de modulation pour la durée du retour de balayage vertical.

5. Montage suivant l'une des revendications précédentes, caractérisé en ce que le noyau (4) est réalisé en tant que noyau E-E ou noyau E-I, l'enroulement primaire (3a) étant monté sur l'une des branches extérieures et l'enroulement secondaire (3b) et éventuellement l'enroulement auxiliaire (7) étant montés sur l'autre branche extérieure (4a ou 4b) du noyau (4) et la branche (4c) médiane étant munie éventuellement d'un entrefer (5).

6. Montage suivant l'une des revendications précédentes, caractérisé en ce que le transformateur (T3) est construit, au moins du côté secondaire, éventuellement en incluant l'enroulement auxiliaire (7), dans la technique d'enroulement en chambre.
